(19) Europäisches Patentamt
European Patent Office
Office européen des brevets

(11) **EP 4 693 112 A1**

(12) **EUROPEAN PATENT APPLICATION**

(43) Date of publication:
**11.02.2026 Bulletin 2026/07**

(21) Application number: **25194071.4**

(22) Date of filing: **05.08.2025**

(51) International Patent Classification (IPC):
**G06N 5/01** (2023.01)     **G06F 17/11** (2006.01)

(52) Cooperative Patent Classification (CPC):
**G06N 5/01; G06F 17/11;** G06N 3/04; G06N 10/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 JP 2024130609**

(71) Applicant: **FUJITSU LIMITED**
**Kawasaki-shi, Kanagawa 211-8588 (JP)**

(72) Inventor: **YONEOKA, Noboru**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **DATA PROCESSING APPARATUS, DATA PROCESSING METHOD, AND COMPUTER PROGRAM**

(57)     A storage unit stores first solutions each being a set of values of state variables. A processing unit obtains, from a search unit that searches for a solution based on a first evaluation function, a second solution obtained through search using an initial solution generated from the first solutions. The first evaluation function includes a constraint term indicating a violation degree of constraints on the state variables and a first constraint coefficient indicating a weight for the constraint term. The processing unit replaces any stored first solution with the second solution, depending on comparison between evaluation values of each first solution and the second solution, indicated by a second evaluation function obtained by replacing the first constraint coefficient with a second constraint coefficient, and determines the first constraint coefficient for next search, based on whether the constraints are satisfied by the second solution and/or other solutions obtained through searches.

FIG. 1

# EP 4 693 112 A1

**Description**

FIELD

The embodiments discussed herein relate to a data processing apparatus, a data processing method, and a computer program.

BACKGROUND

An information processing apparatus may be used to solve combinatorial optimization problems. The information processing apparatus searches for, among combinations of values of the state variables included in an evaluation function, a combination that minimizes the value of the evaluation function. In this case, the combination of values of the state variables that minimizes the value of the evaluation function corresponds to a ground state or an optimal solution, which is represented by a set of state variables. Examples of a search method for obtaining an approximate solution to a combinatorial optimization problem within a practical time include greedy search, tabu search, and simulated annealing (SA).

Here, for example, there has been proposed a combinatorial optimization apparatus that solves a combinatorial optimization problem by minimizing or maximizing the value of an objective function of the combinatorial optimization problem using a fully connected neural network. The combinatorial optimization apparatus expresses the objective function as the sum of a product of a constraint function, which represents the degree of violation of constraint conditions, and a penalty parameter, and an evaluation function, which represents the quality of a solution.

There has also been proposed a system that calculates an objective function based on values including an energy market value, an electricity rate, power producing, storing, and consumption, and detects an optimal solution for charging or discharging an energy storage system using the objective function. In this system, the objective function is optimized using feasibility constraints, and is optimized again using technical constraints and additional constraints.

There has also been proposed a system that determines an objective function and corresponding constraint conditions of a residential microgrid in future time period, based on power load data and solar power output data. The optimization objective of the objective function is to minimize the total cost of the residential microgrid. This system solves the objective function with a particle swarm optimization algorithm, so as to obtain a load dispatch scheme suitable for the residential microgrid in future time period.

There has also been proposed a system that determines optimal settings for resource actuators, such as fans, that vary the supply of resources, such as cooling airflow, to entities, such as blade servers. This system formulates a constraint optimization problem having an objective function that computes a power consumption level and a plurality of constraints, and solves the constraint optimization problem using a Lagrangian multiplier, dynamic programming, interior point method, or another. See, for example, the following literatures.

Japanese Laid-open Patent Publication No. 6-175995
Japanese Laid-open Patent Publication No. 2022-130284
U.S. Patent Application Publication No. 2002/0161867
U.S. Patent Application Publication No. 2010/0235011

An evaluation function may include a constraint term indicating the degree of violation of constraints imposed on state variables. This constraint term adds the degree of violation of the constraints based on the values of the state variables, to the evaluation function.

Here, the constraint term may include a constraint coefficient, which is a weight coefficient for weighting the degree of violation of the constraints. In this case, it is not easy to determine an appropriate constraint coefficient. For example, if the constraint coefficient is too large, the search range for solutions is narrowed, which makes it difficult to reach a better solution. On the other hand, if the constraint coefficient is too small, it is difficult to obtain a solution that satisfies the constraints.

SUMMARY

In one aspect, it is desirable to improve solving performance.

In one aspect, there is provided a data processing apparatus including: a storage unit for storing a plurality of first solutions, each of the first solutions being a set of values of a plurality of state variables; and a processing unit for: obtaining a second solution obtained as a result of a search using an initial solution generated based on the plurality of first solutions, from a search unit, the search unit being configured to search for a solution based on a first evaluation function, the first evaluation function indicating an evaluation value for values of the plurality of state variables, the first evaluation function including a constraint term indicating a degree of violation of a constraint on the plurality of state variables and a first constraint coefficient indicating a weight for the constraint term; replacing one of the plurality of first solutions stored in the storage unit with the second solution, depending on a comparison between a first evaluation value of each of the plurality of first solutions and a second evaluation value of the second solution, each of the first evaluation value and the second evaluation value being indicated by a second evaluation function, the second evaluation function being obtained by replacing the first constraint coefficient included in the first evaluation function with a second constraint coefficient different from the first constraint coefficient; and determining whether the constraint is satisfied by at least one solution among a plurality of solutions including the second solution, the plurality of solutions being obtained through a plurality of executions of the search, and determining the first constraint coefficient to be used for a next execution of the search by the search unit, based on a result of determining whether the constraint is satisfied.

BRIEF DESCRIPTION OF DRAWINGS

The invention is described, by way of example only, with reference to the following drawings, in which:

FIG. 1 is a view for describing a data processing apparatus according to a first embodiment;
FIG. 2 illustrates an example of hardware of a data processing apparatus according to a second embodiment;
FIG. 3 illustrates an example of functions of the data processing apparatus;
FIG. 4 illustrates an example of data stored in a solution pool;
FIG. 5 is a flowchart illustrating an example of a search process performed by the data processing apparatus;
FIG. 6 illustrates a first operation example of the data processing apparatus;
FIG. 7 illustrates a second operation example of the data processing apparatus;
FIG. 8 illustrates a third operation example of the data processing apparatus;
FIG. 9 illustrates a comparative example; and
FIG. 10 illustrates a continuation of the comparative example.

DESCRIPTION OF EMBODIMENTS

Hereinafter, embodiments will be described with reference to the drawings.

[First Embodiment]

A first embodiment will be described.

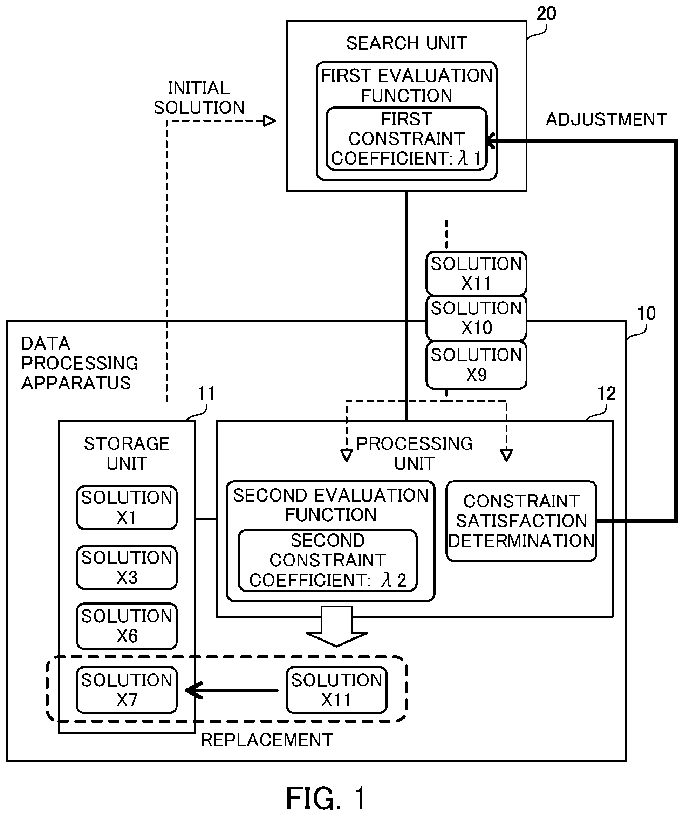

FIG. 1 is a view for describing a data processing apparatus according to the first embodiment.
The data processing apparatus 10 controls a search unit 20 that searches for solutions to combinatorial optimization problems. The search unit 20 may be included in the data processing apparatus 10 or may be provided outside the data processing apparatus 10. The data processing apparatus 10 includes a storage unit 11 and a processing unit 12.
The storage unit 11 may be a volatile semiconductor memory such as a dynamic random access memory (DRAM) or a non-volatile storage such as a hard disk drive (HDD) or a flash memory. The storage unit 11 may include an electronic circuit such as a register. The processing unit 12 and the search unit 20 are, for example, processors such as a central processing unit (CPU), a graphics processing unit (GPU), and a digital signal processor (DSP). The processing unit 12 and the search unit 20 may include a special-purpose electronic circuit such as an application specific integrated circuit (ASIC) or a field programmable gate array (FPGA) . A processor executes a program stored in a memory (or the storage unit 11) such as a DRAM. A set of a plurality of processors may be referred to as a "multiprocessor" or simply as a "processor".
A combinatorial optimization problem is formulated by an objective function indicating the energy of an Ising model, and is replaced with, for example, a problem of minimizing the value of the objective function. The objective function includes a plurality of state variables. Each state variable is a binary variable that takes a value of 0 or 1. The state variable may be referred to as a bit. A solution to the combinatorial optimization problem is represented by values of the plurality of state variables.
For example, a solution that minimizes the value of the objective function represents the ground state of the Ising model and corresponds to an optimal solution to the combinatorial optimization problem. In this case, the combinatorial optimization problem is defined as Formula (1) using an Ising type objective function $C(x)$.

$$\text{minimize} \quad C(x) = -\frac{1}{2}\sum_{i,j} W_{ij}x_i x_j - \sum_i b_i x_i + c \qquad (1)$$

A state vector x has a plurality of state variables as elements and represents a state of the Ising model. In the case of solving a problem that maximizes the energy, the signs of C(x) may be reversed. The problem represented by C(x) of Formula (1) is referred to as a quadratic unconstrained binary optimization (QUBO). C(x) may also be referred to as a cost function.

The first term on the right-hand side of Formula (1) is the sum of the products of the values of two state variables and a weight coefficient over all possible pairs of state variables selectable from all state variables without omission and repetitions. The subscripts i and j are the indices of state variables. Here, $x_i$ denotes the i-th state variable, and $x_j$ denotes the j-th state variable. $W_{ij}$ is a weight coefficient that indicates the weight between the i-th state variable and the j-th state variable, or the intensity of coupling strength. Note that $W_{ij} = W_{ji}$ and $W_{ii} = 0$. In addition, the total number of state variables is denoted by n, and n is an integer of 2 or more.

The second term on the right-hand side of Formula (1) is the sum of the products of the bias and value of each of all the state variables. Here, $b_i$ denotes the bias for the i-th state variable. c is a constant.

Here, constraints may be imposed on a plurality of state variables, as in a constrained quadratic programming problem. For example, a linear inequality constraint is expressed by Formula (2).

$$\sum_{i=1}^{n} A_{ki}x_i \leq B_k \qquad (2)$$

In Formula (2), k is an index of the inequality constraint, and k = 1, 2, ..., m. Here, m denotes the number of inequality constraints and is an integer of 1 or more. $A_{ki}$ and $B_k$ are constants that are given based on a constraint. The present example presents a quadratic programming problem, but other types of problems may also be applicable.

In the case where the constraint represented by Formula (2) is imposed, the combinatorial optimization problem may be expressed as a problem of minimizing the value of the evaluation function E(x) of Formula (3), that is, the evaluation value.

$$E(x) = C(x) + L(x) \qquad (3)$$

Here, L(x) is referred to as a penalty function. L(x) is expressed by Formula (4).

$$L(x) = \sum_k \left( \lambda_k \times \max\left( 0, \sum_i A_{ki}x_i - B_k \right) \right) \qquad (4)$$

The max operator denotes an operation that takes the maximum value among the values in the parentheses. $\lambda_k$ is a hyperparameter. $\lambda_k$ is a constraint coefficient indicating a weight for the inequality constraint k. $\lambda_k$ is, for example, a real number greater than 0. Let $L_k = \max(0, \Sigma_i A_{ki}x_i - B_k)$. $L_k$ is a constraint term corresponding to the inequality constraint k and indicates the degree of violation of the inequality constraint k. $L_k$ takes a positive value when the inequality constraint k is violated, and becomes 0 when the inequality constraint k is satisfied.

The search unit 20 searches for a better solution while gradually changing the variable x on the basis of E(x) with a heuristic method to transition the state. For example, for the solution search, the search unit 20 may employ the greedy search, the Tabu search, the SA, or another. With regard to a problem of minimizing the evaluation value, a smaller evaluation value indicates a better solution, whereas a larger evaluation value indicates a worse solution.

Note that the value of the constraint coefficient $\lambda_k$ affects the solving performance. For example, if $\lambda_k$ is too large, L(x) has strong influence in the solution search based on E(x). Although a solution obtained through the search is likely to satisfy the constraints at L(x) = 0, C(x) is not sufficiently small. On the other hand, if $\lambda_k$ is too small, L(x) has weak influence in the solution search based on E(x). Although C(x) becomes small, L(x) > 0 is obtained, which means that it is likely to violate the constraints. Therefore, the processing unit 12 controls the problem solving using the search unit 20 as follows.

The storage unit 11 stores a plurality of first solutions, each of which is a set of values of the plurality of state variables. The number of first solutions held in the storage unit 11 is determined in advance. In the example of FIG. 1, the number of first solutions held in the storage unit 11 is four. As will be described later, a first solution held in the storage unit 11 may be replaced with a new solution obtained from the search unit 20 by the processing unit 12. Further, the space of the storage unit 11 that holds the plurality of first solutions may be referred to as a solution pool.

The plurality of first solutions held in the storage unit 11 are used to generate an initial solution for a search performed by the search unit 20. The initial solution refers to a state at the start of the search, and may be referred to as a search start state. The processing unit 12 generates the initial solution based on the plurality of first solutions held in the storage unit 11, inputs the generated initial solution to the search unit 20, and causes the search unit 20 to start the search starting from the initial solution. For example, a different initial solution may be given to the search unit 20 at the start of each search.

The processing unit 12 may use a predetermined method such as path relinking to generate an initial solution. For the path relinking, please see, for example, in the following literature.

Y. Wang and three others, "Path relinking for unconstrained binary quadratic programming", European Journal of Operational Research, volume 223, issue 3, December 16, 2012, pp. 595-604

The search unit 20 searches for a solution based on a first evaluation function corresponding to the problem to be solved. The first evaluation function is expressed by Formula (3). The first evaluation function includes a constraint term and a first constraint coefficient indicating a weight for the constraint term. The first constraint coefficient used as $\lambda$ in Formula (3) is denoted as $\lambda 1$. Note that the first evaluation function may include a plurality of constraint terms as described above. In the case where the first evaluation function includes a plurality of constraint terms $\{L_k\}$, the first evaluation function also includes a plurality of first constraint coefficients $\{\lambda 1_k\}$ corresponding to the plurality of constraint terms $\{L_k\}$. The values of the plurality of first constraint coefficients are individually determined.

The search unit 20 performs the search starting from the received initial solution, and outputs a second solution obtained as a result of the search. The processing unit 12 obtains the second solution output by the search unit 20.

The processing unit 12 evaluates the second solution using a second evaluation function. The second evaluation function is obtained by replacing the first constraint coefficient of the first evaluation function with a second constraint coefficient different from the first constraint coefficient. That is, the first evaluation function and the second evaluation function have the same forms of C(x) and the constraint term, but have a different constraint coefficient by which the constraint term is multiplied. The second constraint coefficient that replaces $\lambda$ in Formula (3) is denoted as $\lambda 2$. As the second constraint coefficient $\lambda 2$, a sufficiently large value ($\lambda 2 >> C(x)$) is used as compared with possible values that C(x) is able to take. In the case where the second evaluation function includes a plurality of constraint terms $\{L_k\}$, the second evaluation function also includes a plurality of second constraint coefficients $\{\lambda 2_k\}$ corresponding respectively to the plurality of constraint terms $\{L_k\}$. The values of the plurality of second constraint coefficients are individually determined. The values of the second constraint coefficients are fixed.

In the evaluation of the second solution, the processing unit 12 calculates the first evaluation value of each of the plurality of first solutions held in the storage unit 11 and the second evaluation value of the newly obtained second solution by using the second evaluation function. The processing unit 12 compares the second evaluation value with each first evaluation value. If the second evaluation value is better than any of the first evaluation values, the processing unit 12 replaces one of the plurality of first solutions stored in the storage unit 11 with the second solution.

For example, the processing unit 12 replaces the worst solution among the plurality of first solutions with the second solution. As a result, the worst solution is removed from the storage unit 11, and the second solution is added to the storage unit 11 as a new first solution. In this case, the processing unit 12 is able to perform the process of "comparing the second evaluation value of the second solution with the first evaluation value of each of the plurality of first solutions" by performing a process of "comparing the second evaluation value of the second solution with the worst first evaluation value among the first evaluation values of the plurality of first solutions". If the second evaluation value is better than the worst first evaluation value, the processing unit 12 replaces the first solution corresponding to the worst first evaluation value with the second solution. Otherwise, the processing unit 12 maintains the solutions held in the storage unit 11 without performing the replacement.

In this way, by using the second evaluation function to evaluate the solutions held in the storage unit 11, solutions satisfying L(x) = 0 and having smaller values of C(x) are preferentially stored in the storage unit 11.

For example, it is assumed that four solutions X1, X3, X6, and X7 obtained as a search result by the search unit 20 are held in the storage unit 11. In this case, it is also assumed that the processing unit 12 causes the search unit 20 to execute a search using an initial solution generated based on the solutions X1, X3, X6, and X7, and obtains a new solution X11 from the search unit 20.

Here, it is assumed that, among the solutions X1, X3, X6, and X7, the solution having the worst evaluation value based on the second evaluation function is the solution X7. The processing unit 12 compares the evaluation value of the solution X11 with the evaluation value of the solution X7, obtained using the second evaluation function. If the evaluation value of the solution X11 is better than the evaluation value of the solution X7, the processing unit 12 replaces the solution X7 held in the storage unit 11 with the solution X11. Therefore, an initial solution for the next search is generated based on the solutions X1, X3, X6, and X11.

In addition, the processing unit 12 obtains, from the search unit 20, a plurality of solutions including a second solution obtained through a plurality of searches, and adjusts the first constraint coefficient $\lambda 1$. In the example of FIG. 1, the processing unit 12 adjusts the first constraint coefficient $\lambda 1$ based on three solutions obtained through three searches. Here, the plurality of solutions used for adjusting the first constraint coefficient $\lambda 1$ are held separately from the solutions used for generating an initial solution (for example, the solutions X1, X3, X6, and X7), either in the storage unit 11 or in another storage unit of the data processing apparatus 10,

Furthermore, the processing unit 12 may use a plurality of search units 20. In this case, the processing unit 12 may cause the plurality of search units 20 to perform searches in parallel and obtain a plurality of solutions from the plurality of search units 20. Alternatively, the processing unit 12 may cause one search unit 20 to perform a plurality of searches to obtain a plurality of solutions from the search unit 20.

In the example of FIG. 1, the processing unit 12 obtains solutions X9, X10, and X11 as results of three searches. For example, the processing unit 12 may obtain the solutions X9, X10, and X11 as results of causing three search units 20 to perform searches in parallel. Alternatively, the processing unit 12 may obtain the solutions X9, X10, and X11 as results of three searches executed by one search unit 20. In this connection, in the same manner as with the solution X11, the processing unit 12 also determines at the time of obtaining each of the solutions X9 and X10 whether to store the solution in the storage unit 11. In the example of FIG. 1, it is assumed that it is determined that the solutions X9 and X10 are not stored in the storage unit 11.

Then, the processing unit 12 determines whether at least one solution among the plurality of solutions satisfies each constraint. Whether a certain solution satisfies the constraint k is determined based on the value of the constraint term $L_k$ as described above. That is, in the case of $L_k = 0$, the constraint k is satisfied. In the case of $L_k > 0$, the constraint k is not satisfied, that is, the constraint k is violated. The processing unit 12 adjusts the first constraint coefficient $\lambda 1$ used by the search unit 20, based on the result of determining whether the constraint is satisfied.

Specifically, in the case where at least one solution among the plurality of solutions (for example, solutions X9, X10, and X11) obtained from the search unit 20 satisfies a constraint, the processing unit 12 decreases the first constraint coefficient $\lambda 1$ corresponding to the constraint. As a method of decreasing the first constraint coefficient $\lambda 1$, for example, there is a method of setting a value obtained by multiplying the previous $\lambda 1$ by a predetermined value smaller than 1 (e.g., 0.9) as a new $\lambda 1$.

On the other hand, in the case where none of the plurality of solutions obtained from the search unit 20 satisfies the constraint, the processing unit 12 increases the first constraint coefficient $\lambda 1$ corresponding to the constraint. As a method of increasing the first constraint coefficient $\lambda 1$, for example, there is a method of setting a value obtained by multiplying the previous $\lambda 1$ by a predetermined value larger than 1 (e.g., 1.1) as a new $\lambda 1$.

In the case where the number of constraints is m (k = 1, ..., m), the processing unit 12 adjusts each of the m first constraint coefficients $\lambda 1_k$ independently.

Then, the processing unit 12 causes the search unit 20 to start a new solution search using the adjusted first constraint coefficients. In this way, the processing unit 12 iteratively performs the search using the search unit 20 a certain number of times or for a certain period of time. When completing the iterations of the search the certain number of times or for the certain period of time, the processing unit 12 outputs a plurality of first solutions held in the storage unit 11 as final solutions. For example, the processing unit 12 may output all of the first solutions held in the storage unit 11. Alternatively, the processing unit 12 may preferentially output a predetermined number of first solutions having better evaluation values obtained by the second evaluation function, among the plurality of first solutions held in the storage unit 11.

As described above, with the data processing apparatus 10, a plurality of first solutions, each of which is a set of values of a plurality of state variables, are held in the storage unit 11. A second solution obtained as a result of a search using an initial solution generated based on the plurality of first solutions is obtained from the search unit 20 that searches for a solution based on a first evaluation function that includes a constraint term indicating the degree of violation of constraints on the plurality of state variables and a first constraint coefficient indicating a weight for the constraint term. Depending on the comparison between the first evaluation value of each of the plurality of first solutions and the second evaluation value of the second solution, each indicated by a second evaluation function, any one of the plurality of first solutions stored in the storage unit 11 is replaced with the second solution. The second evaluation function is a function obtained by replacing the first constraint coefficient included in the first evaluation function with a second constraint coefficient different from the first constraint coefficient. In addition, it is determined whether at least one solution among a plurality of solutions including the second solution, obtained through a plurality of searches, satisfies a constraint. The search unit 20 determines the first constraint coefficient to be used for the next search, based on the result of determining whether the constraint is satisfied.

Thus, the data processing apparatus 10 is able to improve the solving performance of the search unit 20. Specifically, the data processing apparatus 10 is able to control the magnitude of the first constraint coefficient so as to fluctuate around the boundary where the constraint is barely satisfied, and the search unit 20 is able to achieve both a search in which the constraint is relaxed and a search in which the constraint is satisfied. As a result, the data processing apparatus 10 is able to increase the likelihood of reaching a better solution in the problem-solving process of the search unit 20. In addition, by automatically and appropriately controlling the constraint coefficient, the data processing apparatus 10 is able to improve the solving performance while reducing the user's burden of adjusting the constraint coefficient.

Furthermore, depending on the type of a problem, it may be desired to limit solutions used for generating an initial solution to constraint-satisfying solutions, so that the initial solution to be used by the search unit 20 is close to a constraint-satisfying solution. In this case, by setting the second constraint coefficient to a sufficiently large value, the data processing apparatus 10 is able to perform control so that solutions that satisfy $L(x) = 0$ and have smaller values of $C(x)$ are preferentially stored in the storage unit 11 as described above. That is, the data processing apparatus 10 is able to easily perform control so that only constraint-satisfying solutions are used for generating an initial solution, which increases the likelihood of reaching a better solution in the vicinity the constraint-satisfying solutions. In this way, the data processing apparatus 10 is able to improve the solving performance by narrowing down solutions used for generating an initial solution to constraint-satisfying solutions.

[Second Embodiment]

Next, a second embodiment will be described.

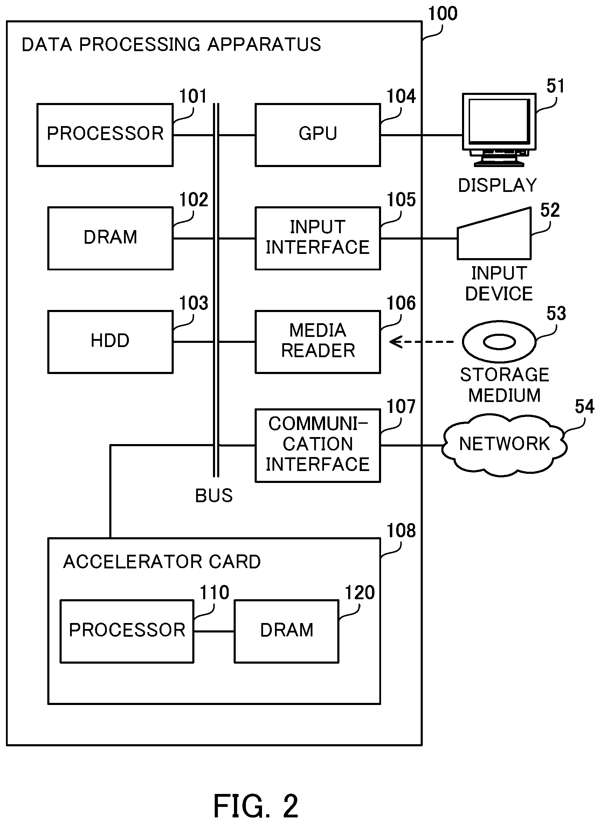

FIG. 2 illustrates an example of hardware of a data processing apparatus according to the second embodiment.

The data processing apparatus 100 searches for solutions to combinatorial optimization problems, such as constrained quadratic programming problems, using a greedy search, a tabu search, SA, or another method, and outputs the found solutions. A constrained combinatorial optimization problem is formulated by the evaluation function $E(x)$ of Formula (3), and is replaced with, for example, a problem of minimizing the value of the evaluation function $E(x)$. The constraints may be inequality constraints or other constraints such as equality constraints. The evaluation function $E(x)$ has m constraint terms corresponding to m constraints. The value (evaluation value) of the evaluation function $E(x)$ may be referred to as energy. Furthermore, the combinatorial optimization problem may be a problem other than the quadratic programming problem.

The data processing apparatus 100 includes a processor 101, a DRAM 102, an HDD103, a GPU 104, an input interface 105, a media reader 106, a communication interface 107, and an accelerator card 108. These units included in the data processing apparatus 100 are connected to a bus inside the data processing apparatus 100. The processor 101 corresponds to the processing unit 12 of the first embodiment. The DRAM 102 corresponds to the storage unit 11 of the first embodiment.

The processor 101 is an arithmetic device that executes program instructions. The processor 101 is, for example, a CPU. The processor 101 loads at least part of a program or data stored in the HDD 103 into the DRAM 102 and executes the program. The processor 101 may include a plurality of processor cores. The data processing apparatus 100 may include a plurality of processors. The processes described below may be performed in parallel using a plurality of processors or processor cores. A set of a plurality of processors may be referred to as a "multiprocessor" or simply as a "processor". The processor may be referred to as "processor circuitry". A plurality of processes performed by the data processing apparatus 100 may be performed by different processors, or at least some of the plurality of processes may be performed by the same processor.

The DRAM 102 is a volatile semiconductor memory that temporarily stores a program executed by the processor 101 and data used by the processor 101 during processing. The data processing apparatus 100 may include a memory of a type other than DRAM, or may include a plurality of memories.

The HDD 103 is a non-volatile storage device that stores software programs such as an operating system (OS), middleware, and application software, and data. The data processing apparatus 100 may include another type of storage device such as a flash memory or a solid state drive (SSD), or may include a plurality of non-volatile storage devices.

The GPU 104 outputs images to a display 51 connected to the data processing apparatus 100 in accordance with instructions from the processor 101. The display 51 may be any type of display such as a cathode ray tube (CRT) display, a liquid crystal display (LCD), a plasma display, or an organic electro-luminescence (OEL) display.

The input interface 105 receives input signals from an input device 52 connected to the data processing apparatus 100 and outputs the input signals to the processor 101. As the input device 52, a pointing device such as a mouse, a touch panel, a touch pad, or a trackball, a keyboard, a remote controller, a button switch, or another may be used. A plurality of types of input devices may be connected to the data processing apparatus 100.

The media reader 106 is a reading device that reads programs and data stored in a storage medium 53. As the storage medium 53, for example, a magnetic disk, an optical disc, a magneto-optical disk (MO), a semiconductor memory, or another may be used. Magnetic disks include a flexible disk (FD) and an HDD. Optical discs include a compact disc (CD) and a digital versatile disc (DVD).

For example, the media reader 106 copies a program or data from the storage medium 53 to another storage medium such as the DRAM 102 or the HDD 103. The read program is executed by, for example, the processor 101. The storage medium 53 may be a portable storage medium, and may be used to distribute programs and data. The storage medium 53 and the HDD 103 may be referred to as computer-readable storage media.

The communication interface 107 is connected to a network 54 and communicates with other information processing apparatuses via the network 54. The communication interface 107 may be a wired communication interface connected to a wired communication device such as a switch or a router, or may be a wireless communication interface connected to a wireless communication device such as a base station or an access point.

The accelerator card 108 is a hardware accelerator that searches for solutions to combinatorial optimization problems. The accelerator card 108 includes a processor 110 and a DRAM 120. The processor 110 searches for solutions using the greedy search, tabu search, SA, or another. The processor 110 is, for example, a GPU, a DSP, an ASIC, or an FPGA. The DRAM 120 stores data used by the processor 110 during processing.

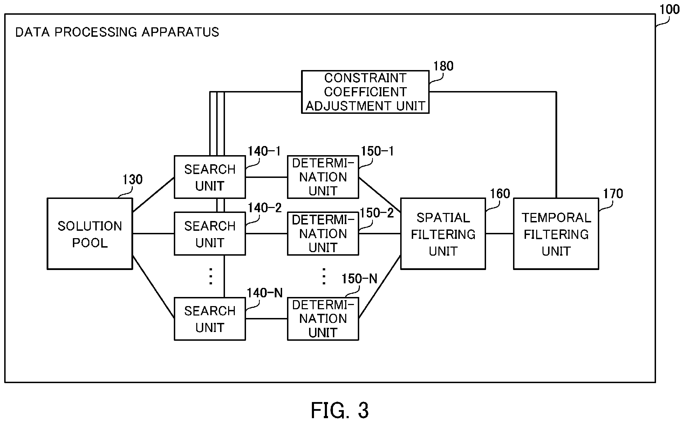

FIG. 3 illustrates an example of functions of the data processing apparatus.

The data processing apparatus 100 includes a solution pool 130, search units 140-1, 140-2, ..., and 140-N, determination units 150-1, 150-2, ..., and 150-N, a spatial filtering unit 160, a temporal filtering unit 170, and a constraint coefficient adjustment unit 180. The number of search units 140-1, 140-2, ..., and 140-N is N. The number of determination units 150-1, 150-2, ..., and 150-N is N. N is an integer of 1 or more. The number of search units is the same as the number of determination units.

The solution pool 130 preferably holds a predetermined number of solutions having better evaluation values among the solutions found by the search units 140-1, 140-2, ..., and 140-N. The storage space of the DRAM 102 is used as the solution pool 130. The storage space of the HDD 103 may be used as the solution pool 130.

Each search unit 140-1, ..., and 140-N generates an initial solution based on the predetermined number of solutions held in the solution pool 130 and executes a search based on the evaluation function E (x) of Formula (3). The search units 140-1, ..., and 140-N are able to perform the searches in parallel. The evaluation function E(x) includes m constraint coefficients $\lambda_k$ (k = 1, ..., m). As will be described later, the constraint coefficients $\lambda_k$ included in L(x) of Formula (3) are adjusted by the constraint coefficient adjustment unit 180.

Each search unit 140-1, ..., and 140-N searches for a solution using a method such as the greedy search, tabu search, or SA, for example, and obtains a local solution. For example, each search unit 140-1, ..., and 140-N calculates the difference $\Delta E$ in E(x) when a specific state variable among n-bit state variables $x_i$ (i = 1, 2, ..., n) is changed from 0 to 1 or from 1 to 0, and determines a state variable to be changed next, based on $\Delta E$. For example, each search unit 140-1, ..., and 140-N obtains a set S of a plurality of top-ranked solutions having smaller values of E(x) after the search process.

Each search unit 140-1, ..., and 140-N evaluates the solutions in the set S one by one to determine whether a solution in the set S exhibits an improvement over the solutions in the solution pool 130, and writes back any improved solution obtained as a result of the search to the solution pool 130. The evaluation for detecting an improved solution to be written back is performed based on an evaluation function E' (x). The evaluation function E' (x) is obtained by replacing each of the m constraint coefficients $\lambda_k$ of the evaluation function E(x) with a fixed constraint coefficient $\lambda_k$'. As $\lambda_k$', a sufficiently large value ($\lambda_k$' >> C(x)) is used as compared with possible values that the objective function C(x) is able to take. A value satisfying $\lambda_k$' > $\lambda_k$ may be used.

Each search unit 140-1, ..., and 140-N calculates the value of the evaluation function E' (x) for a solution obtained as the current search result. If the value of E' (x) is smaller than the solution (worst solution) having the maximum value of E' (x) in the solution pool 130, the search unit 140-1, ..., and 140-N updates the worst solution in the solution pool 130 to the solution obtained by the current search. Each solution held in the solution pool 130 at the time when each search unit 140-1, ..., and 140-N completes the iterations of the search for a predetermined number of times or for a predetermined period of time may be used as a final solution to the problem.

Each determination unit 150-1, ..., and 150-N determines whether each solution found by the corresponding search unit 140-1, ..., and 140-N satisfies the constraints. Each determination unit 150-1, ..., and 150-N determines, for each of the m constraints, whether the obtained solution satisfies the constraint, and outputs, for each constraint, a 1-bit flag indicating whether the constraint is satisfied. A flag value of "1" indicates satisfaction, and a flag value of "0" indicates violation.

The spatial filtering unit 160 aggregates the flags for each constraint output by the determination units 150-1, ..., and 150-N, performs an OR operation on the flags for each constraint, and outputs the result of the OR operation for each constraint. Since the number of determination units is n, the spatial filtering unit 160 performs the OR operation on the n flags for each constraint. The spatial filtering unit 160 outputs the result of the OR operation for each of the m constraints. If it is determined, based on the result of the OR operation for a certain constraint, that the solution output by any one of the search units is a constraint-satisfying solution, the constraint is satisfied.

The temporal filtering unit 170 holds the output results of the spatial filtering unit 160 for the past T times, and outputs one determination result for each constraint based on the past T results and an input from the spatial filtering unit 160. The temporal filtering unit 170 holds, for each constraint, the bits representing the constraint satisfaction determination results for the past T times, obtained by the spatial filtering unit 160. The temporal filtering unit 170 outputs "1" if the sum of the values of the T + 1 bits indicating the determination results, which are the T bits and the new input bit input from the spatial filtering unit 160, is 1 or more, and outputs "0" otherwise. In this connection, the temporal filtering unit 170 includes a buffer, not illustrated, for holding the output results of the spatial filtering unit 160 for the past T times. As the buffer, for example, a storage space such as the DRAM 102 is used.

The constraint coefficient adjustment unit 180 adjusts the constraint coefficient $\lambda_k$ for each constraint based on the output result of the temporal filtering unit 170. The constraint coefficient adjustment unit 180 independently adjusts the constraint coefficient $\lambda_k$ for each of the m constraint terms.

If the satisfaction determination result for the constraint k obtained by the temporal filtering unit 170 is "0" (violation), the constraint coefficient adjustment unit 180 increases $\lambda_k$. As a method of increasing $\lambda_k$, for example, there is a method of setting a value obtained by multiplying the previous $\lambda_k$ by 1.1 as new $\lambda_k$.

If the satisfaction determination result for the constraint k obtained by the temporal filtering unit 170 is "1" (satisfaction), the constraint coefficient adjustment unit 180 decreases $\lambda_k$. As a method of decreasing $\lambda_k$, for example, there is a method of setting a value obtained by multiplying the previous $\lambda_k$ by 0.9 as new $\lambda_k$.

Note here that the search units 140-1, ..., and 140-N, the determination units 150-1, ..., and 150-N, the spatial filtering unit 160, the temporal filtering unit 170, and the constraint coefficient adjustment unit 180 are implemented by the processor 101 executing programs stored in the DRAM 102. In addition, each search unit 140-1, ..., and 140-N may cause the processor 110 of the accelerator card 108 to search for a solution using the greedy search, tabu search, SA, or the like, and obtain the solution obtained as a result of the search from the accelerator card 108. That is, the search units 140-1, ..., and 140-N are able to search for the solution using the accelerator card 108. The accelerator card 108 may be an example of the search units 140-1, ..., and 140-N.

Further, the generation of initial solutions to be input to the search units 140-1, **...,** and 140-N and the update of the solutions in the solution pool 130 may be performed by a search control unit that controls the search units 140-1, ..., and 140-N. In this case, the search control unit may also be implemented by the processor 101 executing a program stored in the DRAM 102. Alternatively, the search control unit may be implemented by the processor 110.

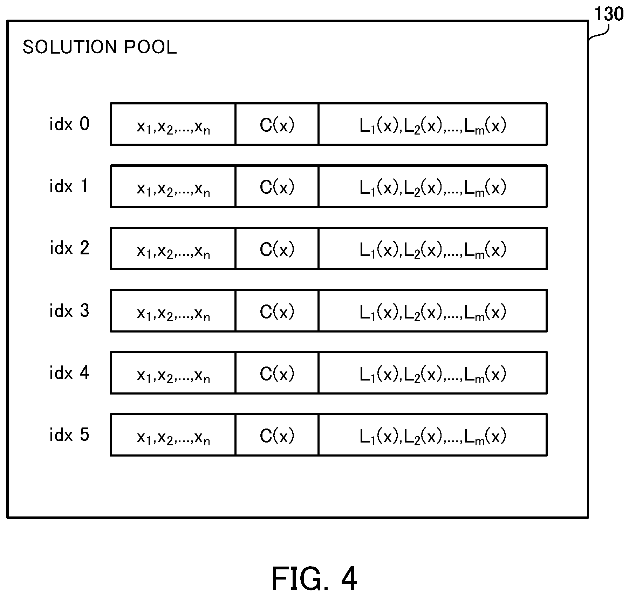

FIG. 4 illustrates an example of data stored in the solution pool.

As an example, the solution pool 130 holds records corresponding to six solutions. Six indices (idx) "0" to "5" identify the records in the solution pool 130. For example, the records in the solution pool 130 may be sorted such that a smaller index corresponds to a solution having a smaller value of E' (x) .

Each record includes a solution represented by a state vector $x = (x_1, x_2, ..., x_n)$, the value of the objective function C(x) corresponding to the solution, and the values (constraint violation degree) of the constraint terms $L_1(x), L_2(2), ...,$ and $L_m(x)$ corresponding to the constraints k (k = 1, 2, ..., m) . As described above, $L_k = \max(0, \Sigma_i A_{ki} x_i - B_k)$ .

Next, a processing procedure of the data processing apparatus 100 will be described.

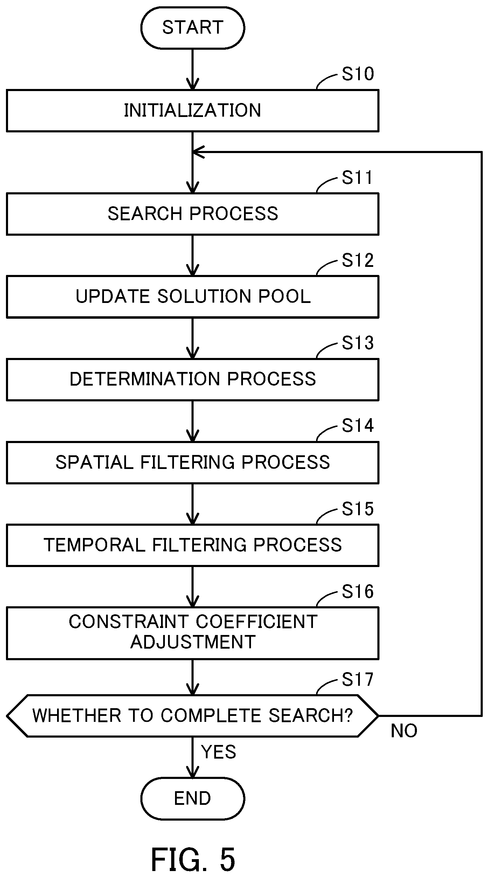

FIG. 5 is a flowchart illustrating an example of a search process performed by the data processing apparatus.

(S10) The solution pool 130 is initialized. In the initialization of the solution pool 130, predetermined solutions are stored in the solution pool 130. The predetermined solutions are randomly generated solution, user-specified solutions, or others. In addition, the constraint coefficient adjustment unit 180 initializes the constraint coefficient $\lambda_k$ to an initial value. The initial value of the constraint coefficient is "1", a user-specified value, or another.

(S11) Each search unit 140-1, ..., and 140-N generates an initial solution from the solutions stored in the solution pool 130, and searches for a solution based on the evaluation function E(x), which includes the constraint coefficient $\lambda_k$, for a certain period of time. Each search unit 140-1, ..., and 140-N obtains the solution with the minimum value of E(x) obtained during the certain period of time.

(S12) Each search unit 140-1, ..., and 140-N updates the solution pool 130. Specifically, each search unit 140-1, ..., and 140-N calculates the value of the evaluation function E' (x), which includes a fixed constraint coefficient $\lambda_k'$, for the solution with the minimum value of E(x) obtained in step S11. Each search unit 140-1, ..., and 140-N compares the calculated value of the evaluation function E' (x) with the value of E' (x) of the worst solution stored in the solution pool 130. The worst solution is the solution with the maximum value of E' (x) among the solutions in the solution pool 130. If the value of E' (x) of the solution obtained after the current search is smaller than the value of E' (x) of the worst solution, each search unit 140-1, ..., and 140-N updates the worst solution in the solution pool 130 to the solution obtained after the current search.

(S13) Each determination unit 150-1, ..., and 150-N determines, for each constraint, whether the solution obtained after the current search by the corresponding search unit 140-1, **...,** and 140-N satisfies the constraint, and outputs a 1-bit flag as a determination result. The flag is "1" if the constraint is satisfied, and is "0" if the constraint is violated. The total number of bits of all the flags output by the determination units 150-1, ..., and 150-N is (the number of constraints m) $\times$ (the number of determination units n).

(S14) The spatial filtering unit 160 performs a spatial filtering process. Specifically, for each constraint, the spatial filtering unit 160 performs an OR operation on the output results from the determination units. The number of bits output from the spatial filtering unit 160 is equal to the number of constraints m.

(S15) The temporal filtering unit 170 performs a temporal filtering process. Specifically, for each constraint, the temporal filtering unit 170 holds the outputs for the past T times from the spatial filtering unit 160, and outputs "1" if the sum of the values of the (T + 1) bits indicating the determination results, which include the current input from the spatial filtering unit 160, is 1 or more, and outputs "0" otherwise.

(S16) The constraint coefficient adjustment unit 180 adjusts the constraint coefficient $\lambda_k$ for each constraint, based on the output result of the temporal filtering unit 170. If the satisfaction determination result for the constraint k obtained by the temporal filtering unit 170 is "0" (violated), the constraint coefficient adjustment unit 180 adjusts $\lambda_k$ so that the adjusted $\lambda_k$ is larger than the current $\lambda_k$. If the satisfaction determination result for the constraint k obtained by the temporal filtering unit 170 is "1" (satisfied), the constraint coefficient adjustment unit 180 adjusts $\lambda_k$ so that the adjusted $\lambda_k$ is smaller than the current $\lambda_k$.

(S17) Each search unit 140-1, ..., and 140-N determines whether to complete the search. If the search is completed, the solutions in the solution pool 130 are output, and the process of the data processing apparatus 100 is completed. If the search is not yet completed, the process proceeds to step S11. For example, each search unit 140-1, ..., and 140-N may determine whether to complete the search, based on whether steps S11 to S16 have been executed for a predetermined search time (a predetermined period of time) or a predetermined number of times set by the user. If steps S11 to S16 have been executed for the predetermined search time or the predetermined number of times, the search is completed. If steps S11 to S16 have not been executed for the predetermined search time or the predetermined number of times, the search is not completed.

For example, in the output of the solutions stored in the solution pool 130 in step S17, the processor 101 may display an image representing the solutions stored in the solution pool 130, on the display 51. Alternatively, in the output of the solutions stored in the solution pool 130, the processor 101 may store information indicating the solutions stored in the solution pool 130 in a non-volatile storage device such as the HDD 103 or transmit the information to an external device via the communication interface 107.

In this connection, the update of the solution pool in step S12 may be executed immediately after any of steps S13 to S16. Further, as described above, the generation of the initial solution in step S11 and the update of the solution pool 130 in step S12 may be executed by the search control unit that controls the search units 140-1, ..., and 140-N.

Note that the data processing apparatus 100 may operate as follows depending on an intended application. In the following description, as an example, it is assumed that the processor 101 has 16 processor cores.

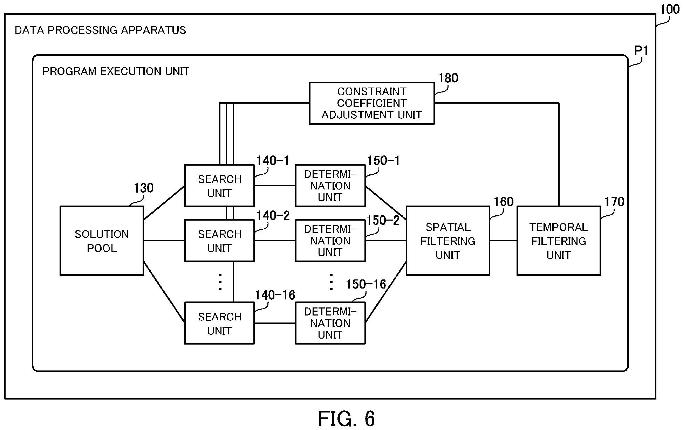

FIG. 6 illustrates a first operation example of the data processing apparatus.

In the first operation example, the processor 101 uses the 16 processor cores to operate 16 search units in parallel. The data processing apparatus 100 includes a program execution unit P1. The "program execution unit" is a set of functions of the data processing apparatus 100 used for problem solving. The program execution unit P1 includes a solution pool 130, search units 140-1, 140-2, ..., and 140-16, determination units 150-1, 150-2, ..., and 150-16, a spatial filtering unit 160, a temporal filtering unit 170, and a constraint coefficient adjustment unit 180.

The spatial filtering unit 160 performs, for each constraint, an OR operation on the satisfaction determination results obtained by the 16 determination units for the 16 search units. The temporal filtering process of the temporal filtering unit 170 is off, that is, T = 0.

Note that, in the case of a problem in which the constraints are difficult to satisfy, even if $\lambda_k$ is sufficiently large, the output solutions from the search units may violate the constraints, and $\lambda_k$ may be excessively increased. To deal with this, the data processing apparatus 100 is able to suppress such an excessive increase in $\lambda_k$ by using the plurality of search units and the spatial filtering unit 160 to adjust the satisfaction determination result for each constraint in a manner biased toward satisfaction.

In addition, in the first operation example, the plurality of search units update one solution pool 130, starting with the initial state of the solution pool 130, thereby speeding up the problem solving.

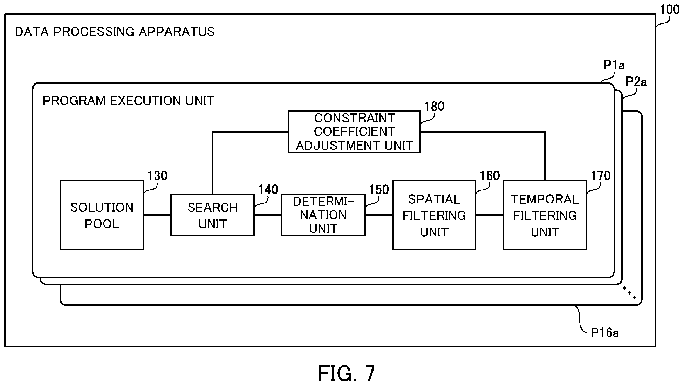

FIG. 7 illustrates a second operation example of the data processing apparatus.

In the second operation example, the processor 101 uses the 16 processor cores to run 16 independent executions of the entire program. The data processing apparatus 100 includes 16 program execution units P1a, P2a, ..., and P16a. The program execution unit P1a includes a solution pool 130, a search unit 140, a determination unit 150, a spatial filtering unit 160, a temporal filtering unit 170, and a constraint coefficient adjustment unit 180. Similarly to the program execution unit P1a, each of the program execution units P2a, ..., and P16a includes a solution pool, one search unit, one determination unit, a spatial filtering unit, a temporal filtering unit, and a constraint coefficient adjustment unit. The following will mainly describe the program execution unit P1a, but the same processes as those of the program execution unit P1a are performed in the program execution units P2a, ..., and P16a.

The program execution units P1a, P2a, ..., and P16a start a search process for the same problem from the initial states of their respective different solution pools.

The spatial filtering unit 160 performs an OR operation, as in the case where a plurality of search units and a plurality of determination units are provided. However, since only one search unit 140 and one determination unit 150 are provided, the spatial filtering unit 160 outputs a satisfaction determination result for each constraint obtained by the determination unit 150 as it is. In the temporal filtering process performed by the temporal filtering unit 170, T is, for example, T = 15.

Note that, in the case of a problem in which the constraints are difficult to satisfy, even if $\lambda_k$ is sufficiently large, the output solution obtained by the search unit may violate the constraints, and $\lambda_k$ may be excessively increased. Such an excessive increase in $\lambda_k$ may be suppressed by using the temporal filtering unit 170 to adjust the satisfaction determination result for each constraint in a manner biased toward satisfaction.

Furthermore, in the second operation example, the update speed of the solution pool 130 is slower than that in the first operation example. However, by providing more solution pools than the first operation example, it is possible to prevent the program execution units P1a, ..., and P16a as a whole from falling into a local solution.

When the search for a predetermined number of times or a predetermined period of time is completed, the data processing apparatus 100 outputs all or some of the solutions held in the plurality of solution pools. The data processing apparatus 100 may preferentially select a predetermined number of solutions having better evaluation values among the solutions held in the plurality of solution pools and output the predetermined number of selected solutions.

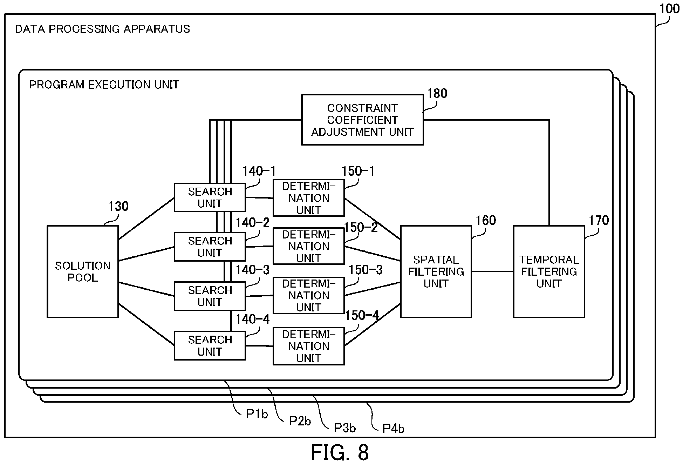

FIG. 8 illustrates a third operation example of the data processing apparatus.

In the third operation example, the processor 101 uses the 16 processor cores to run four independent executions of the entire program. The data processing apparatus 100 includes four program execution units P1b, P2b, P3b, and P4b. The program execution unit P1b includes a solution pool 130, search units 140-1, 140-2, 140-3, and 140-4, determination units 150-1, 150-2, 150-3, and 150-4, a spatial filtering unit 160, a temporal filtering unit 170, and a constraint coefficient adjustment unit 180. Similarly to the program execution unit P1b, each of the program execution units P2b, P3b, and P4b includes a solution pool, four search units, four determination units, a spatial filtering unit, a temporal filtering unit, and a constraint coefficient adjustment unit.

The program execution units P1b, ..., and P4b, start a search process for the same problem from the initial states of their respective different solution pools. In one program execution unit, four search units operate in parallel. The following will mainly describe the program execution unit P1b, but the same processes as those of the program execution unit P1b are performed in the program execution units P2b, P3b, and P4b.

For each constraint, the spatial filtering unit 160 performs an OR operation on the satisfaction determination results obtained by the four determination units for the four search units. In the temporal filtering process of the temporal filtering unit 170, T is, for example, T = 3.

The third operation example provides the advantages of both the first operation example and the second operation example. That is, the data processing apparatus 100 is able to achieve the speed-up of the problem solving by increasing the update speed of the solution pools, and is also able to prevent the program execution units P1b, ..., and P4b as a whole from falling into a local solution.

Next, a comparative example will be described.

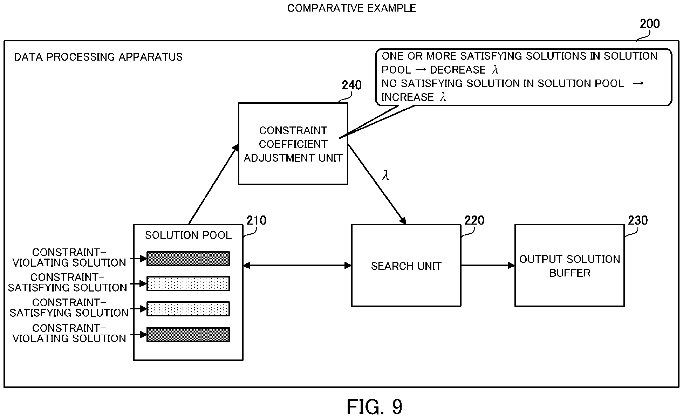

FIG. 9 illustrates a comparative example.

The data processing apparatus 200 of the comparative example includes a solution pool 210, a search unit 220, an output solution buffer 230, and a constraint coefficient adjustment unit 240.

The solution pool 210 holds a predetermined number of solutions among solutions obtained by the search unit 220. The number of solutions held in the solution pool 210 is two or more. In the example of FIG. 9, the number of solutions held in the solution pool 210 is four.

The search unit 220 searches for a solution based on the evaluation function $E(x)$ of Formula (3) using an initial solution generated from the predetermined number of solutions held in the solution pool 210. If the value of $E(x)$ of a new solution obtained through a search is better than the value of $E(x)$ of the worst solution held in the solution pool 210, the search unit 220 replaces the worst solution held in the solution pool 210 with the new solution obtained through the search.

The output solution buffer 230 stores a predetermined number of solutions among the solutions found by the search unit 220. The solutions stored in the output solution buffer 230 are candidates for final solutions to the problem. The quality of each solution held in the output solution buffer 230 is determined based on the value of the evaluation function $E'(x)$. The evaluation function $E'(x)$ is obtained by replacing the constraint coefficient $\lambda_k$ included in Formula (3) with a predetermined fixed constraint coefficient $\lambda_k'$. A sufficiently large value is used as $\lambda_k'$. If the value of $E'(x)$ of a new solution is better than the value of $E'(x)$ of the worst solution in the output solution buffer 230, the search unit 220 replaces the worst solution in the output solution buffer 230 with the new solution. As a result, solutions that satisfy the constraints and have small values of $C(x)$ are preferentially held in the output solution buffer 230.

The constraint coefficient adjustment unit 240 performs control so as to decrease the constraint coefficient $\lambda_k$ if the predetermined number of solutions held in the solution pool 210 include at least one constraint-satisfying solution, and to increases the constraint coefficient $\lambda_k$ if no constraint-satisfying solution is included.

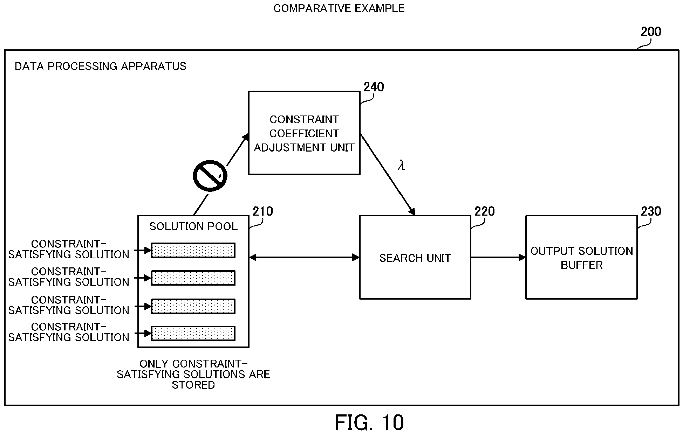

FIG. 10 illustrates a continuation of the comparative example.

Note, however, that the data processing apparatus 200 of the comparative example has a problem in that it is not possible to limit solutions that are stored in the solution pool 210 to constraint-satisfying solutions. For example, depending on the type of a problem, it may be desired to limit solutions held in the solution pool 210 to constraint-satisfying solutions, so that an initial solution generated from the solutions in the solution pool 210 and used by the search unit 220 is closer to a constraint-satisfying solution.

Assume, for example, that, when evaluating solutions held in the solution pool 210, the data processing apparatus 200 fixes $\lambda_k$ included in $E(x)$ to a value sufficiently larger than possible values that the objective function $C(x)$ is able to take, so as to perform control so as to store only constraint-satisfying solutions in the solution pool 210. This case results that constraint-satisfying solutions always exist in the solution pool 210. Therefore, the constraint coefficient adjustment unit 240 is not able to control $\lambda_k$, which is used in the search by the search unit 220, on the basis of the number of constraint-satisfying solutions held in the solution pool 210.

In contrast to the above comparative example, the data processing apparatus 100 of the second embodiment does not use the solutions held in the solution pool 130 for the adjustment of the constraint coefficient $\lambda_k$ by the constraint coefficient adjustment unit 180. Instead, the data processing apparatus 100 uses output solutions from the search units for the adjustment of $\lambda_k$ via the spatial filtering unit 160 and the temporal filtering unit 170. That is, the data processing apparatus 100 is able to separate a feedback loop for the constraint coefficient adjustment from the update of the solution pool. Therefore, by setting the constraint coefficient $\lambda_k'$ to a sufficiently large value, the data processing apparatus 100 is able to perform control so that solutions that satisfy $L(x) = 0$ and have smaller values of $C(x)$ are preferentially stored in the solution pool 130, as described above. That is, the data processing apparatus 100 is able to easily perform control so that only constraint-satisfying solutions are used for the generation of an initial solution, which increases the likelihood of reaching a better solution in the vicinity of the constraint-satisfying solutions. In this way, the data processing apparatus 100 is able to improve the solving performance by narrowing down solutions used for generating an initial solution to constraint-satisfying solutions.

Further, the data processing apparatus 100 is able to control the magnitude of the constraint coefficient $\lambda_k$ so as to fluctuate around the boundary where the constraint is barely satisfied, and each search unit is able to achieve both a search in which the constraints are relaxed and a search in which the constraints are satisfied. As a result, the data processing apparatus 100 is able to increase the likelihood of reaching a better solution in the problem-solving process of each search unit, and is able to improve the solving performance. In addition, by automatically and appropriately controlling the constraint coefficient, the data processing apparatus 100 is able to improve the solving performance while reducing the user's burden of adjusting the constraint coefficient.

Note that the data processing apparatus 100 may further include an output solution buffer corresponding to the output solution buffer 230. For example, a storage space such as the DRAM 102 may be used as the output solution buffer. For example, the data processing apparatus 100 stores some top-ranked solutions held in one solution pool in the output solution buffer, or stores some top-ranked solutions held in a plurality of solution pools in the output solution buffer. In this case, the data processing apparatus 100 is able to easily extract and output final solutions from the output solution buffer.

As described above, the data processing apparatus 100 according to the second embodiment performs the following process. The solution pool 130 implemented by a storage space such as the DRAM 102 stores a plurality of first solutions, each of which is a set of values of a plurality of state variables. The processor 101 obtains, from a search unit that searches for a solution based on a first evaluation function, a second solution obtained as a result of a search using an initial solution generated based on the plurality of first solutions. The first evaluation function indicates an evaluation value corresponding to the values of the plurality of state variables, and includes a constraint term indicating the degree of violation of constraints on the plurality of state variables and a first constraint coefficient indicating a weight for the constraint term. The processor 101 replaces any of the plurality of first solutions stored in the solution pool 130 with the second solution depending on the comparison between the first evaluation value of each of the plurality of first solutions and the second evaluation value of the second solution, each indicated by a second evaluation function. The second evaluation function is obtained by replacing the first constraint coefficient included in the first evaluation function with a second constraint coefficient different from the first constraint coefficient. The processor 101 determines whether at least one solution among a plurality of solutions including the second solution, obtained through a plurality of searches, satisfies a constraint. The processor 101 determines the first constraint coefficient to be used by the search unit for the next search, based on the result of determining whether the constraint is satisfied.

Thus, the data processing apparatus 100 is able to improve the solving performance. For example, the data processing apparatus 100 is able to perform control so that only constraint-satisfying solutions are pooled in the solution pool 130 while adjusting the constraint coefficient, and is thereby able to set an initial solution based on the constraint-satisfying solutions held in the solution pool 130.

As described above, the processor 101 may be a set of a plurality of processors. In this case, at least two of the plurality of processes performed by the processor 101 may be performed by different processors. For example, among the process of obtaining second solutions, the process of replacing a first solution in the solution pool 130 with a second solution, the process of determining whether each constraint is satisfied, and the process of adjusting each first constraint coefficient, at least two processes may be performed by different processors.

Each search unit may be implemented by the processor 101 (for example, any one of a plurality of processors) or may be implemented by the processor 110 in the accelerator card 108.

As described in the first operation example of FIG. **6,** the processor 101 may obtain the plurality of above-described solutions by causing each of the plurality of search units to perform a search. Thus, the data processing apparatus 100 is able to speed up the problem solving. The plurality of search units may perform the searches in parallel.

As described in the second operation example of FIG. 7, the processor 101 may obtain the plurality of above-described solutions by causing one search unit to perform a search a plurality of times. As a result, the data processing apparatus 100 is able to secure a large number of solution pools and control the search unit to perform a search independently for each solution pool, and is able to prevent falling into a local solution as a whole.

In addition, as described in the third operation example of FIG. **8,** the processor 101 may cause each of the plurality of search units to perform a search to obtain one or more solutions among the plurality of above-described solutions. The processor 101 may generate a flag indicating whether at least one solution among the one or more solutions satisfies a constraint. The processor 101 may determine whether at least one solution among the plurality of solutions satisfies the constraint, based on the flag generated this time and a predetermined number of flags generated up to the last time for solutions other than the one or more solutions among the plurality of solutions. As a result, the data processing apparatus 100 is able to speed up the problem solving by the parallel search, to secure a large number of solution pools, to perform control so as to perform the parallel search independently for each solution pool, and to prevent falling into a local solution as a whole. The plurality of search units may perform the searches in parallel.

In the adjustment of the first constraint coefficient, the processor 101 decreases the first constraint coefficient if at least one solution among the plurality of solutions including the second solution satisfies the constraint. The processor 101 increases the first constraint coefficient if any of the plurality of solutions including the second solution does not satisfy the constraint.

As a result, the data processing apparatus 100 is able to control the magnitude of the first constraint coefficient so as to fluctuate around the boundary where the constraint is barely satisfied, and each search unit is able to achieve both a search in which the constraint is relaxed and a search in which the constraint is satisfied. As a result, the data processing apparatus 100 is able to increase the likelihood of reaching a better solution in the problem-solving process of each search unit, and is able to improve the solving performance. In addition, the data processing apparatus 100 is able to perform control so that the first constraint coefficient does not become larger than needed, by adjusting the satisfaction determination results for the constraint in a manner biased toward satisfaction.

The first evaluation function is the sum of the objective function $C(x)$ including a plurality of state variables and the product of the constraint term $L_k$ and the first constraint coefficient $\lambda_k$. The second evaluation function is the sum of the objective function $C(x)$ and the product of the constraint term $L_k$ and the second constraint coefficient $\lambda_k'$. The second constraint coefficient $\lambda_k'$ is a fixed value larger than possible values that the objective function $C(x)$ is able to take. Accordingly, the data processing apparatus 100 is able to perform control so that only constraint-satisfying solutions are pooled in the solution pool 130, and is able to set an initial solution based on the constraint-satisfying solutions held in the solution pool 130. As a result, the data processing apparatus 100 is able to improve the solving performance.

In the case where the second evaluation value is better than the worst value among the first evaluation values of the plurality of first solutions held in the solution pool 130, the processor 101 replaces the first solution corresponding to the worst value held in the solution pool 130 with the second solution. Accordingly, the data processing apparatus 100 is able to perform control so that only constraint-satisfying solutions are pooled in the solution pool 130, and is able to set, for each search unit, an initial solution based on the constraint-satisfying solutions held in the solution pool 130. As a result, the data processing apparatus 100 is able to improve the solving performance. In addition, the data processing apparatus 100 is able to pool appropriate final solution candidates in the solution pool 130.

When each search unit completes iterations of the search a predetermined number of times or for a predetermined period of time, the processor 101 outputs at least one of the plurality of first solutions held in the solution pool 130 at the time when the iterations are completed. Thus, the data processing apparatus 100 is able to efficiently output the final solutions to the problem on the basis of the second evaluation function.

The information processing of the first embodiment may be implemented by causing the processing unit 12 to execute a program. The information processing of the second embodiment may be implemented by causing the processor 101 to execute a program. The program may be stored in the computer-readable storage medium 53.

For example, the program may be distributed by distributing the storage medium 53 on which the program is stored. The program may be stored in another computer and distributed via a network. For example, the computer may store (install) the program stored in the storage medium 53 or the program received from another computer in a storage device such as the DRAM 102 or the HDD 103, read the program from the storage device, and execute the program.

In one aspect, it is possible to improve the solving performance.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1.  A data processing apparatus comprising:

    storage means (11) for storing a plurality of first solutions, each of the first solutions being a set of values of a plurality of state variables; and
    processing means (12) for:

    obtaining a second solution obtained as a result of a search using an initial solution generated based on the plurality of first solutions, from search means (20), the search means being configured to search for a solution based on a first evaluation function, the first evaluation function indicating an evaluation value for values of the plurality of state variables, the first evaluation function including a constraint term indicating a degree of violation of a constraint on the plurality of state variables and a first constraint coefficient indicating a weight for the constraint term;
    replacing one of the plurality of first solutions stored in the storage means with the second solution, depending on a comparison between a first evaluation value of each of the plurality of first solutions and a second evaluation value of the second solution, each of the first evaluation value and the second evaluation value being indicated by a second evaluation function, the second evaluation function being obtained by replacing the first constraint coefficient included in the first evaluation function with a second constraint coefficient different from the first constraint coefficient; and
    determining whether the constraint is satisfied by at least one solution among a plurality of solutions including the second solution, the plurality of solutions being obtained through a plurality of executions of the search, and determining the first constraint coefficient to be used for a next execution of the search by the search means, based on a result of determining whether the constraint is satisfied.

2.  The data processing apparatus according to claim **1,** wherein

    the search means (20) is provided in plurality, and
    the processing means (12) includes obtaining the plurality of solutions by causing each of the plurality of search means to perform the search.

3.  The data processing apparatus according to claim **1,** wherein the processing means (12) includes obtaining the plurality of solutions by causing the search means (20) to perform the search a plurality of times.

4.  The data processing apparatus according to claim 1, wherein
    the search means (20) is provided in plurality, and the processing means (12) includes

    obtaining one or more solutions among the plurality of solutions by causing each of the plurality of search means to perform the search,
    generating a flag indicating whether the constraint is satisfied by at least one solution among the one or more solutions, and
    determining whether the constraint is satisfied by at least one solution among the plurality of solutions, based on the flag generated this time and a predetermined number of flags generated up to a last time for solutions other than the one or more solutions among the plurality of solutions.

5.  The data processing apparatus according to any of the preceding claims, wherein, in determining the first constraint coefficient, the processing means (12)

    decreases the first constraint coefficient upon determining that the constraint is satisfied by at least one of the plurality of solutions, and
    increases the first constraint coefficient upon determining that the constraint is not satisfied by any of the plurality of solutions.

6.  The data processing apparatus according to any of the preceding claims, wherein

    the second evaluation function is a sum of an objective function including the plurality of state variables and a product of the constraint term and the second constraint coefficient, and
    the second constraint coefficient is a fixed value larger than a value that the objective function is able to take.

7. The data processing apparatus according to any of the preceding claims, wherein the processing means (12) replaces, upon determining that the second evaluation value is better than a worst value among the first evaluation values of the plurality of first solutions, a first solution corresponding to the worst value held in the storage means (11) with the second solution.

8. The data processing apparatus according to any of the preceding claims, wherein the processing means (12) outputs, in response to the search means (20) completing iterations of the search a predetermined number of times or for a predetermined period of time, at least one of the plurality of first solutions held in the storage means (11) at a completion time of the iterations.

9. A data processing method executed by a computer, the data processing method comprising:

   holding a plurality of first solutions in storage means (11), each of the first solutions being a set of values of a plurality of state variables;
   obtaining a second solution obtained as a result of a search using an initial solution generated based on the plurality of first solutions, from search means (20), the search means being configured to search for a solution based on a first evaluation function, the first evaluation function indicating an evaluation value for values of the plurality of state variables, the first evaluation function including a constraint term indicating a degree of violation of a constraint on the plurality of state variables and a first constraint coefficient indicating a weight for the constraint term;
   replacing one of the plurality of first solutions stored in the storage means with the second solution, depending on a comparison between a first evaluation value of each of the plurality of first solutions and a second evaluation value of the second solution, each of the first evaluation value and the second evaluation value being indicated by a second evaluation function, the second evaluation function being obtained by replacing the first constraint coefficient included in the first evaluation function with a second constraint coefficient different from the first constraint coefficient; and
   determining whether the constraint is satisfied by at least one solution among a plurality of solutions including the second solution, the plurality of solutions being obtained through a plurality of executions of the search, and determining the first constraint coefficient to be used for a next execution of the search by the search means, based on a result of determining whether the constraint is satisfied.

10. A computer program that causes a computer to perform a process comprising:

   holding a plurality of first solutions in storage means (11), each of the first solutions being a set of values of a plurality of state variables;
   obtaining a second solution obtained as a result of a search using an initial solution generated based on the plurality of first solutions, from search means (20), the search means being configured to search for a solution based on a first evaluation function, the first evaluation function indicating an evaluation value for values of the plurality of state variables, the first evaluation function including a constraint term indicating a degree of violation of a constraint on the plurality of state variables and a first constraint coefficient indicating a weight for the constraint term;
   replacing one of the plurality of first solutions stored in the storage means with the second solution, depending on a comparison between a first evaluation value of each of the plurality of first solutions and a second evaluation value of the second solution, each of the first evaluation value and the second evaluation value being indicated by a second evaluation function, the second evaluation function being obtained by replacing the first constraint coefficient included in the first evaluation function with a second constraint coefficient different from the first constraint coefficient; and
   determining whether the constraint is satisfied by at least one solution among a plurality of solutions including the second solution, the plurality of solutions being obtained through a plurality of executions of the search, and determining the first constraint coefficient to be used for a next execution of the search by the search means, based on a result of determining whether the constraint is satisfied.

FIG. 1

FIG. 2

FIG. 3

SOLUTION POOL 130

| | | | |
|---|---|---|---|
| idx 0 | $x_1, x_2, ..., x_n$ | $C(x)$ | $L_1(x), L_2(x), ..., L_m(x)$ |
| idx 1 | $x_1, x_2, ..., x_n$ | $C(x)$ | $L_1(x), L_2(x), ..., L_m(x)$ |
| idx 2 | $x_1, x_2, ..., x_n$ | $C(x)$ | $L_1(x), L_2(x), ..., L_m(x)$ |
| idx 3 | $x_1, x_2, ..., x_n$ | $C(x)$ | $L_1(x), L_2(x), ..., L_m(x)$ |
| idx 4 | $x_1, x_2, ..., x_n$ | $C(x)$ | $L_1(x), L_2(x), ..., L_m(x)$ |
| idx 5 | $x_1, x_2, ..., x_n$ | $C(x)$ | $L_1(x), L_2(x), ..., L_m(x)$ |

FIG. 4

START

INITIALIZATION — S10

SEARCH PROCESS — S11

UPDATE SOLUTION POOL — S12

DETERMINATION PROCESS — S13

SPATIAL FILTERING PROCESS — S14

TEMPORAL FILTERING PROCESS — S15

CONSTRAINT COEFFICIENT ADJUSTMENT — S16

WHETHER TO COMPLETE SEARCH? — S17

NO

YES

END

FIG. 5

FIG. 6

DATA PROCESSING APPARATUS

100

PROGRAM EXECUTION UNIT

P1a

P2a

CONSTRAINT
COEFFICIENT
ADJUSTMENT UNIT

180

130

SOLUTION
POOL

SEARCH
UNIT

140

DETERMI-
NATION
UNIT

150

SPATIAL
FILTERING
UNIT

160

TEMPORAL
FILTERING
UNIT

170

P16a

FIG. 7

DATA PROCESSING APPARATUS

PROGRAM EXECUTION UNIT

CONSTRAINT COEFFICIENT ADJUSTMENT UNIT
180

130
SOLUTION POOL

140-1
SEARCH UNIT

150-1
DETERMI-NATION UNIT

140-2
SEARCH UNIT

150-2
DETERMI-NATION UNIT

140-3
SEARCH UNIT

150-3
DETERMI-NATION UNIT

140-4
SEARCH UNIT

150-4
DETERMI-NATION UNIT

160
SPATIAL FILTERING UNIT

170
TEMPORAL FILTERING UNIT

100

P1b   P2b   P3b   P4b

FIG. 8

COMPARATIVE EXAMPLE

FIG. 9

EP 4 693 112 A1

COMPARATIVE EXAMPLE

200

DATA PROCESSING APPARATUS

240

CONSTRAINT
COEFFICIENT
ADJUSTMENT UNIT

$\lambda$

210

SOLUTION POOL

CONSTRAINT–
SATISFYING SOLUTION

CONSTRAINT–
SATISFYING SOLUTION

CONSTRAINT–
SATISFYING SOLUTION

CONSTRAINT–
SATISFYING SOLUTION

ONLY CONSTRAINT–
SATISFYING SOLUTIONS ARE
STORED

220

SEARCH UNIT

230

OUTPUT SOLUTION
BUFFER

FIG. 10

25

Europäisches
Patentamt

European
Patent Office

Office européen
des brevets

# EUROPEAN SEARCH REPORT

**Application Number**

EP 25 19 4071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/406422 A1 (WATANABE YASUHIRO [JP]) 30 December 2021 (2021-12-30) * paragraph [0044] * * paragraph [0066] * * paragraph [0075] - paragraph [0076] * * paragraph [0112] * * paragraph [0268] * * paragraph [0294] * * figure 1 * | 1-10 | INV. G06N5/01 G06F17/11 |
| A | US 2020/380065 A1 (TOMITA YOSHINORI [JP]) 3 December 2020 (2020-12-03) * paragraph [0030] - paragraph [0052] * * figure 1 * | 1-10 | |

**TECHNICAL FIELDS SEARCHED (IPC)**

G06N
G06F

The present search report has been drawn up for all claims

| Place of search | Date of completion of the search | Examiner |
|---|---|---|
| The Hague | 7 November 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 4071

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| US 2021406422 | A1 | 30-12-2021 | CN | 113849298 A | 28-12-2021 |
| | | | EP | 3929775 A1 | 29-12-2021 |
| | | | JP | 7488458 B2 | 22-05-2024 |
| | | | JP | 2022006994 A | 13-01-2022 |
| | | | US | 2021406422 A1 | 30-12-2021 |
| US 2020380065 | A1 | 03-12-2020 | CN | 112001111 A | 27-11-2020 |
| | | | EP | 3748552 A1 | 09-12-2020 |
| | | | JP | 2020194273 A | 03-12-2020 |
| | | | US | 2020380065 A1 | 03-12-2020 |

EPO FORM P0459

For more details about this annex : see Official Journal of the European Patent Office, No. 12/82

## REFERENCES CITED IN THE DESCRIPTION

**Patent documents cited in the description**

- JP 6175995 A
- JP 2022130284 A
- US 20020161867
- US 20100235011

**Non-patent literature cited in the description**

- **Y. WANG**. Path relinking for unconstrained binary quadratic programming. *European Journal of Operational Research*, 16 December 2012, vol. 223, 595-604